# EUROPEAN PATENT SPECIFICATION

(11) **EP 2 745 477 B1**
(45) Date of publication and mention of the grant of the patent: **27.04.2016**
(21) Application number: 12751208.5
(22) Date of filing: 10.08.2012
(51) Int. Cl.: H04L 12/70

(54) **METHODS AND SYSTEMS FOR PACKET DIFFERENTIATION**
VERFAHREN UND SYSTEME ZUR PAKETDIFFERENZIERUNG
PROCÉDÉS ET SYSTÈMES DE DIFFÉRENCIATION DE PAQUETS

(30) Priority: 18.08.2011 US 201161525027 P
(43) Date of publication of application: 25.06.2014
(73) Proprietor: VID SCALE, Inc., Wilmington DE 19809 (US)
(72) Inventor: MA, Liangping, San Diego, CA 92130 (US); ZEIRA, Ariela, Huntington, NY 11743 (US); SHAHEEN, Kamel, M., King Of Prussia, PA 19406 (US); LIU, Hang, Yardly, PA 19067 (US); DENG, Zhuorong, Brooklyn, NY 11223 (US); LIU, Weimin, Chatham, NJ 07928 (US); WALLACE, Chris, Downingtown, PA 19335 (US); RAPAPORT, Avi, Shoham 6085000 (IL); CHEN, Zhifeng, San Diego, CA 92122 (US); HEPLER, Edward, L., Malvern, PA 19355 (US); MILLER, James, M., Verona, NJ 07044 (US); PRAGADA, Ravikumar, V., Collegeville, PA 19426 (US); RYU, Eun, San Diego, CA 92130 (US)
(74) Representative: Awapatent AB
(86) International application number: PCT/US2012/050405
(87) International publication number: WO 2013/025534

(56) References cited:
- EP-A1- 2 031 807
- EP-A1- 2 117 183
- US-A1- 2002 186 661
- US-A1- 2005 086 354

## Description

### CROSS-REFERENCE TO RELATED APPLICATIONS

This application claims the benefit of U.S. Provisional Patent Application No. 61/525,027 filed August 18, 2011.

### BACKGROUND

With the accelerated adoption of smart phones capable of generating and displaying video, effectively and efficiently transporting video across advanced communication systems has grown in importance. Video transmission may be characterized by intensive use of network resources, tolerance to the loss of certain data, intolerant to the loss of other data, and/or stringent latency requirements in certain circumstances (*e.g*., in the case of video conferencing). Although wireless communications technology has dramatically increased the wireless bandwidth and improved the quality of service for users of mobile devices, the fast-growing demand for video content, such as high-definition (HD) video content, brings new challenges for video content providers, distributors, smartphone manufactures, and/or carrier service providers.

### SUMMARY

Aspects of the invention are defined in a method according to claim 1 and in an apparatus according to claim 7.

Systems and methods are disclosed for providing differentiated quality of service (QoS) to packets of different type. For example, a method for differentiating QoS service of a packet stream may include receiving a single packet stream. The single packet stream may include a first packet type and a second packet type. The method may include associating packets of the first packet type included in the single packet stream with a first packet sub-stream. The first packet sub-stream may be associated with a first QoS level. The method may include associating packets of the second packet type included in the single packet stream with a second packet sub-stream. The second packet sub-stream may be associated with a second QoS level that is different than the first QoS level. The method may include sending the first packet sub-stream and the second packet sub-stream to a packet destination.

Methods and systems for differentiating the QoS service may further include indicating a relative packet order with respect to the single packet stream in each of packets associated with the first packet sub-stream and packets associated with the second packet sub-stream. In an example, the packets may be video packets. For example, the first packet type may be a Network Abstraction Layer (NAL) Unit (NALU) associated with a first NAL Reference Identification (NRI) value, and the second packet type may be a NALU associated with a second NRI value.

A WTRU may be configured to perform the packet separation and transmit the packets. For example, the WTRU may include a processor configured to separate a second video stream to be transmitted into a two or more transmitted video sub-streams. The two or more transmitted sub-streams may include a first video sub-stream associated with packets of a first determined priority and a second video sub-stream associated with packets of a second determined priority. The processor may be further configured to append one or more of a sequence number or a timestamp to packets included in the first video sub-stream and packets included in the second video sub-stream. The one or more of the sequence number or timestamp may indicate a relative order of transmitted packets with respect to other packets include in the second video stream. The WTRU may include a transmitter configured to transmit the two or more video sub-streams.

Example methods for packet differentiation may further include sending an explicit QoS request to a policy control and charging (PCC) entity. The explicit QoS request may include a desired value of a QoS parameter for one or more of the first packet type or the second packet type. A QoS response may be received from the PCC entity. The QoS response may indicate that the QoS request was accepted, modified, or rejected. In an example, the explicit QoS request may indicate the desired value of the QoS parameter as a position in a QoS hyperspace. The QoS hyperspace may be associated with a base of one or more of a delay, a packet error rate, throughput, jitter, etc. In an example a first user datagram protocol (UDP) socket for transmission of the first packet sub-stream may be established, and a second UDP socket for transmission of the second packet sub-stream may be established.

A wireless transmit/receive unit (WTRU) may be configured to send and/or receive the packet sub-streams. For example, the WTRU may receive a plurality of video packet sub-streams. The plurality of video packet sub-streams may include a first video packet sub-stream including packets that encapsulate video packets of a first priority and a second video packet sub-stream including packets that encapsulate video packets of a second priority. The WTRU may be configured to merge the plurality of video packet sub-streams into a video packet stream. The WTRU may be configured to reorder packets of the video packet stream based on one or more of a sequence number or a timestamp included in the packets. The WTRU may include a video decoder configured to decode the reordered packets of the video packet stream. In an example, the sequence number may be included in a sequence number field in a real-time transport protocol (RTP) header and the timestamp may be included in a timestamp field of a RTP header.

The WTRU may be configured to merge the plurality of video packet sub-streams, and reorder the packets of the video packet stream via middleware included between a real-time transport protocol (RTP) entity and the video decoder. The WTRU may be configured to merge the plurality of video packet sub-streams, and reorder the packets of the video packet stream via an RTP entity. In an example, the plurality of video packet sub-streams may be a plurality of Internet Protocol (IP) packet streams. Each IP packet associated with the IP packet streams may include an indication of a type of video packet encapsulated in the IP packet in a field of a header of the IP packet. For example, the field of the header of the IP packet may be one or more of a differentiation services code point (DSCP) field, a traffic class field, or flow identification field. The first video packet sub-stream may be associated with a first evolved packet system (EPS) bearer corresponding to a first QoS class identifier (QCI) value and the second video packet sub-stream is associated with a second EPS bearer corresponding to a second QCI value. Packets associated with the first video packet sub-stream NALUs corresponding to a first NAL unit type and packets associated with the second video packet sub-stream encapsulate NALUs corresponding to a second NAL unit type.

A policy charging and rules function (PCRF) may be configured to receive a QoS request from a WTRU. The QoS request may include one or more requested QoS parameters. The PCRF may determine subscription information applicable to the WTRU. For example, the PCRF may determine the subscription information applicable to the WTRU by requesting the subscription information from a subscriber profile repository (SPR). The PCRF may determine whether to accept, modify, and/or reject the QoS request based on the one or more requested QoS parameters and the subscription information applicable to the WTRU. The PCRF may send a message to the WTRU indicating whether the QOS request has been accepted, modified, and/or rejected. The PCRF may send an indication of the one or more requested QoS parameters a policy charging and enforcement function (PCEF). For example, the PCEF may be included at a packet data network gateway (PDN-GW or P-GW). In an example one or more requested QoS parameters may be used to establish an EPS bearer for the WTRU.

US 2002/0186661 A1 discloses a system and method for policing individual flows and subflows of a data stream. Data traffic streams are classified into separate traffic flows, which in turn can be further classified into subflows, thereby providing for different priority levels of subsets of the flow. The subflows may be still further classified into additional subflows, creating a hierarchical, layered prioritization that can be metered at each vertical and horizontal level of the hierarchy.

EP 2 117 183 A1 discloses a method for providing quality of service control for a stream comprising data of different importance. A device receives data of different importance from the stream, and generates quality of service control information for each frame based on the importance of data. The quality of service control information is used to differentiate the frame so as to provide an intra-flow data differentiation.

EP 2 031 807 A1 discloses a method of controlling a transmission of a stream of packets through a packet-based network. Each packet is associated with significance information indicating which significance level is allocated to the respective packet.

US 2005/0086354 A1 discloses a method and system for preparing multimedia content. A server machine determines whether it has a requested file stored. If the file is present, the file's associated security functions are obtained and the file's content data is analyzed to obtain associated characteristics. The associated security functions and the associated characteristics are combined into a data structure.

### BRIEF DESCRIPTION OF THE DRAWINGS

A more detailed understanding may be had from the following description, given by way of example in conjunction with the accompanying drawings wherein:
FIG. 1A is a system diagram of an example communications system in which one or more disclosed embodiments may be implemented.
FIG. 1B is a system diagram of an example wireless transmit/receive unit (WTRU) that may be used within the communications system illustrated in FIG. 1A.
FIG. 1C is a system diagram of an example radio access network and an example core network that may be used within the communications system illustrated in FIG. 1A.
FIG 1D is a system diagram of another example radio access network and an example core network that may be used within the communications system illustrated in FIG. 1A.
FIG. IE is a system diagram of another example radio access network and an example core network that may be used within the communications system illustrated in FIG. 1A.
FIG. 2 illustrates an example system diagram for a system capable of transporting a plurality of packet sub-streams.
FIG. 3 illustrates an example hyperspace that is based on example atomic QoS parameters of maximum packet error rate, the maximum acceptable delay, and the minimum desired throughput.
FIG. 4 illustrates an example process for establishing an EPS bearer using an QoS request by a WTRU.
FIG. 5 illustrates an example protocol stack for video packet separation, merging, and/or reordering using a middleware module.
FIG. 6 illustrates an example procedure for video packet separation, merging, and/or reordering using a middleware approach.
FIG. 7 illustrates an example approach for enhancing the RTP in order to perform one or more of video packet separation, video packet merging, and/or video packet reordering.
FIG. 8 illustrates an example procedure for video traffic separation, merger, and/or reordering using an RTP Video Profile approach.
FIG. 9 illustrates an approach where IP packets may include the information used for one or more of video packet separation, merging, and/or reordering.

### DETAILED DESCRIPTION OF ILLUSTRATIVE EMBODIMENTS

A detailed description of illustrative embodiments will now be described with reference to the various Figures. Although this description provides a detailed example of possible implementations, it should be noted that the details are intended to be exemplary and in no way limit the scope of the application.

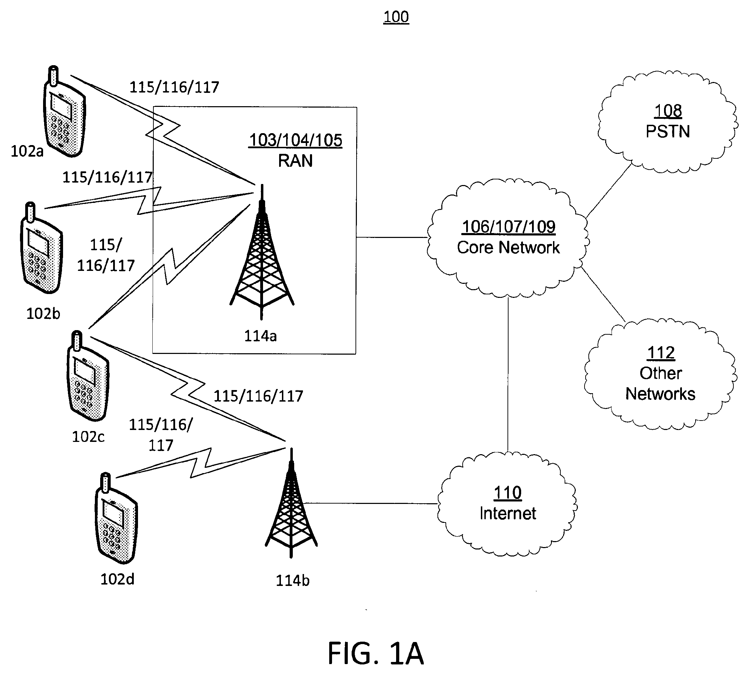

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

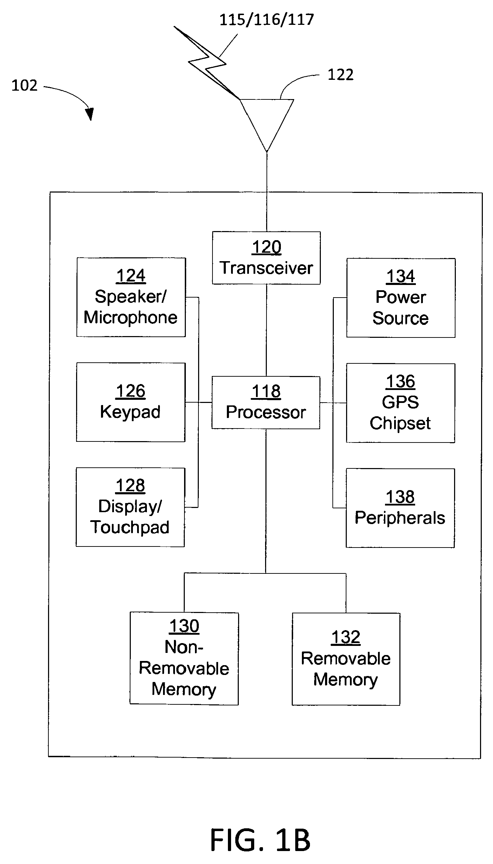

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

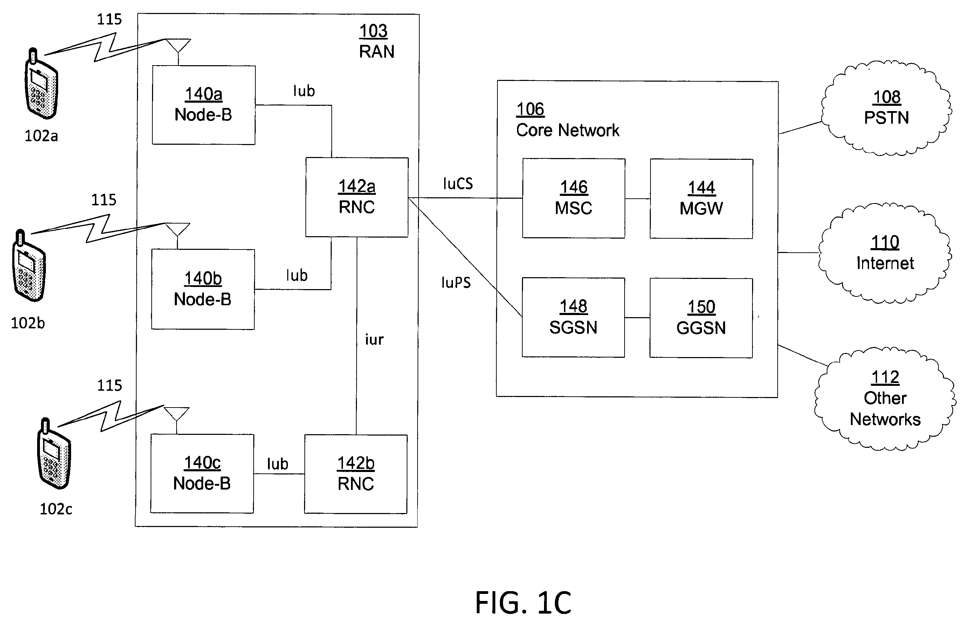

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

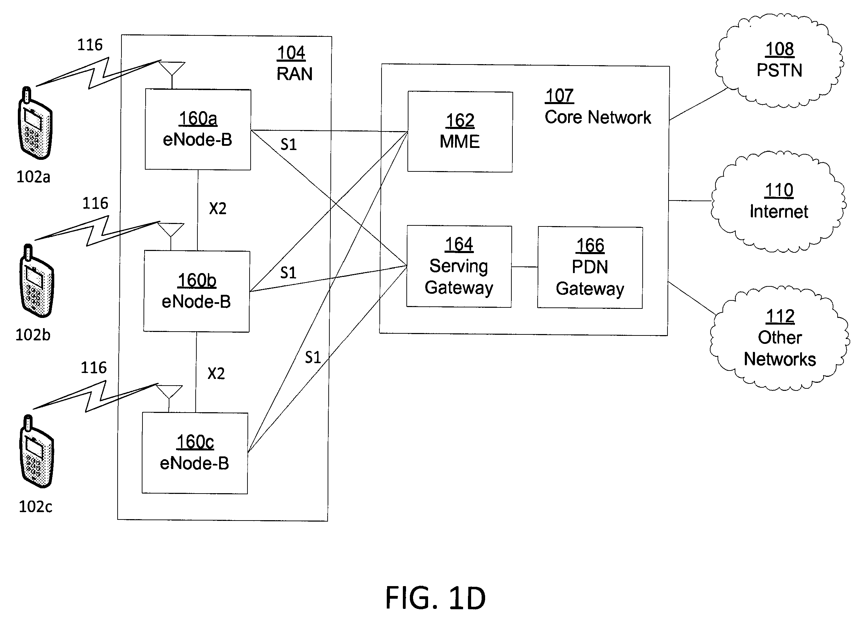

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink and/or downlink, and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

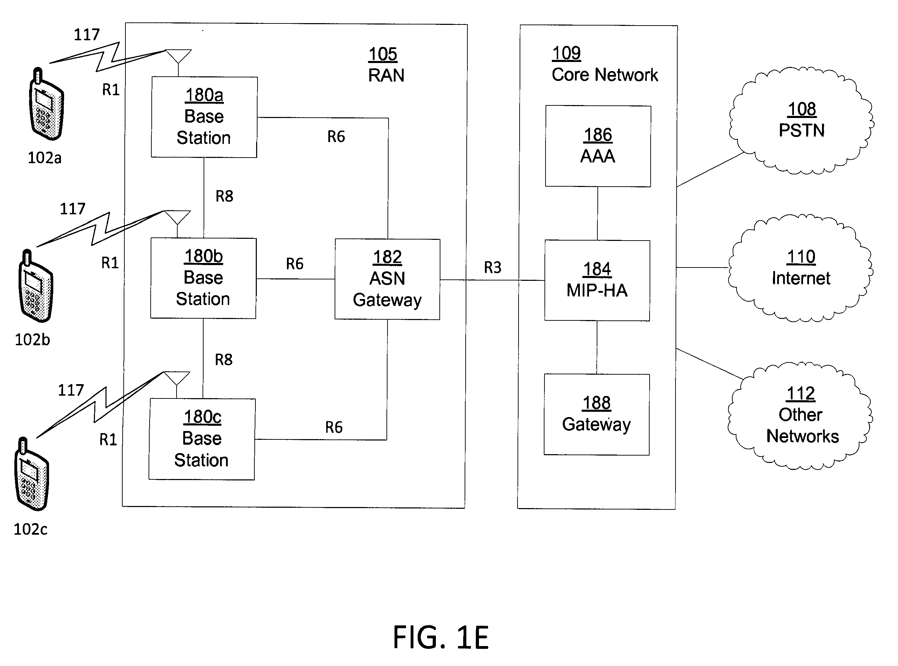

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. IE, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. IE, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. IE, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

Generally, various systems and methods are described herein to differentiate packets, such as video packets, according to a relative importance of an individual packet within an advanced communication system. For example, systems and methods are described for differentiating and processing video packets generated during a single video application session based on a desired Quality of Service (QoS) for the individual packets. When referred to herein the term QoS requirement, which may also be referred to as a QoS level, may correspond to a desired level of performance during the transmission of data over a network. For example, typical QoS parameters (also referred to as QoS metrics) may be bit rate, delay, bit error rate, block error rate, maximum blocking probability, outage probability, service response time, loss rate, jitter, delay jitter, packet dropping probability, whether out-of-order delivery is permitted, and/or the like. One or more desired or guaranteed QoS parameter levels may be used to define a given QoS requirement. For example, for a given QoS requirement for a given packet stream, the network may guarantee that the packet stream will achieve a minimum (or maximum depending of the QoS parameter) QoS parameter level for the given packet stream. As an example, if QoS requirement A corresponds to a maximum delay of 100 ms (QoS parameter 1) and a minimum throughput of 1 Mb/s (QoS parameter 2), the network may ensure that packets associated with QoS requirement achieve a maximum delay of no more than 100 ms during radio access and/or routing and that the throughput of the stream is at least 1 Mb/s if there are enough packets to meet the desired throughput level.

In an example LTE network, QoS parameters may be associated with a given Evolved Packet System (EPS) QoS profile. Example LTE QoS parameters may include a QoS Class Identifier (QCI) (*e.g*., access node-specific parameters that may control bearer-level packet delivery/forwarding treatment), an allocation and retention priority (ARP) (*e.g*., an indication whether bearer establishment/modification request may be accepted or denied), a guaranteed bit rate (GBR) (*e.g*., a minimum bit rate that may be provided to a given bearer), and maximum bit rate (MBR) (*e.g*., the maximum bit rate to be that may be expected from a GBR bearer), an aggregate MBR (AMBR) (*e.g*., the total bit rate of a group of non-GBR bearers) and/or the like.

In an example, packet differentiation may facilitate the allocation of network resources such that improved video quality may be achieved and/or the number of video sessions handled may a network may be increased without significantly adverse effects on the video quality. Systems and methods are described for identifying different types of video packets in advanced communication systems. For example, mechanisms implemented by WTRUs and/or the core network in order to support packet differentiation are disclosed. For purposes of explanation many of the examples disclosed herein may be described in the context of video traffic and video packet differentiation. However, as may be appreciated, the methods and systems disclosed herein may be applicable to a number of types and varieties of packet flows, for example packets flows that include packets of differing relative priority. For example, the systems and methods disclosed herein may be applicable to real-time gaming packet flows, TCP packet flows, and/or a variety of other packet based services.

As an example in terms of video packet differentiation, the systems and methods disclosed herein may be applied to the H.264/AVC video codec, H.264/SVC video codec, Hierarchical P codec, and/or other video codecs. Such codecs may indicate the relative importance and/or priority of individual video packets at the encoder output stream. In an example, the systems and methods described herein may be applicable to other applications (*e.g*., video or otherwise). For instance, the systems and methods described herein may be applied to a stream of packets having varying levels of priority and/or importance. In an example, the packet differentiation may be based on a variety of factors rather than or in addition to packet priority and relative importance. For example, the packet differentiation may be based on the type of packet, the type of service, the Class of Service (CoS), the protocol priority, a virtual local area network (VLAN) priority, a network priority, a source priority, a destination priority, a port priority (*e.g*., a TCP port), an application type, and/or the like.

Further, while many examples may be described in the context of an LTE network, the systems and methods disclosed herein may be equally applicable to other network environments. For example, the systems and methods described herein may be applied across a wide range of advanced communication systems. Example advanced communication systems may include 3GPP and/or non-3GPP systems such as LTE/LTE-A systems (*e.g*., E-UTRA and/or Evolved Packet Core (EPC) networks), UMTS networks (*e.g*., UTRAN and/or UMTS core network), WiFi-based networks, WiMax networks, and/or the like. Although the examples for LTE networks may be described in terms of LTE terminology, the examples may be equally applicable to other types of networks with corresponding functionality. For example, examples described in terms of QCI in an LTE network may be applicable to QoS profiles in a UMTS network or QoS for a service flow in a WiMAX network.

Certain types of traffic, such as video traffic, may be network resource intensive and at times may have relatively strict latency requirements. For video traffic, in order to provide desired video quality and/or Quality of Experience (QoE), the systems and methods described herein may be used to differentiate video packets from non-video packets and/or may be used differentiate different types of video packets, for example video packets within the same video packet stream/flow. In an example, such differentiation may be made even if the video packets are generated by the same video encoder. Generally, differentiating different types of video packets may facilitate the identification and processing of the packets based on the relative importance of the packets being differentiated. In a resource-constrained environment, in order to provide improved video quality at the end of an advanced communication system, the advanced communication system may be configured to identify different types of video packets according to their relative importance and allocate limited network resources to different types of video packets based on the differentiation.

In many advanced communication systems, the information regarding the type of video packets and/or the information regarding the relative importance or priority may be hidden/encapsulated as the protocol data units (PDUs) that include the video data are passed to advanced communication systems. In accordance with the systems and methods described herein, the video source may be configured to separate video packets into two or more sub-streams, for example according to the relative importance of the respective types of video packets included in each of the sub-streams. In accordance with various examples, the communication network may be configured to identify the types of video packets, for example by identifying the corresponding sub-stream associated with an individual packet. In an example, video packet formats may be extended to allow differentiation at a finer granularity.

Various methods may be utilized for video packet identification. For example, deep packet inspection (DPI) may be a technique utilized by an advanced communication network to identify a type of packet and/or information included within a packet. For example, when performing DPI to identify packets the advanced communication system may receive the video encoder output as a single stream and identify the type of packet based on inspecting higher layer data that has been encapsulated within the packet. However, DPI can be more difficult to perform in the presence of packet encryption. For example, encryption in the form of secure real-time transport protocol (SRTP), secure sockets layer (SSL), transport layer security (TSL), Internet Protocol Security (IPsec) encapsulating security payload (ESP), and/or a combination of protocols may be used to secure a packet, making very difficult to inspect the payload of a PDU. Hence, in many practical scenarios DPI may be infeasible for the identification and/or classification of some packets that utilize encryption techniques.

In an example, in order to determine the type of packet that is being inspected, packets that are generated from a given application may be separated into different sub-streams at the packet source, for example by "marking" each of the streams with some type of identification information for use in an advanced communication system. By separating the source packet stream into a series of sub-streams, packets within each of the sub-streams may be processed and routed according to their respective priority and/or desired QoS. One example of a packet stream that may be separated into various sub-streams is a video packet stream.

Changes to 3GPP standards, Internet Engineering Task Force (IETF) standards, video codes, and/or video encoding/decoding standards, as described in more detail below, may be made such that one or more of the communication layers processing the video packets may have sufficient information to identify the sub-streams carrying different types of video packets. For example, one or more of the following changes may be made in order to facilitate sub-stream processing of a packet stream such as a video packet stream: The QCI field may be extended to included information regarding properties of a sub-stream; A more flexible representation of QoS properties may be used, for example to convey more detailed/variable QoS information; A WTRU may be configured to explicitly specify desired QoS requests to the core network; Techniques may be specified for video packet separation, merging, and/or reordering; More information may be exposed as to the type of packet being processed. As it is to be appreciated the changes may related to 3GPP standards, IETF standards, and/or video codec standards.

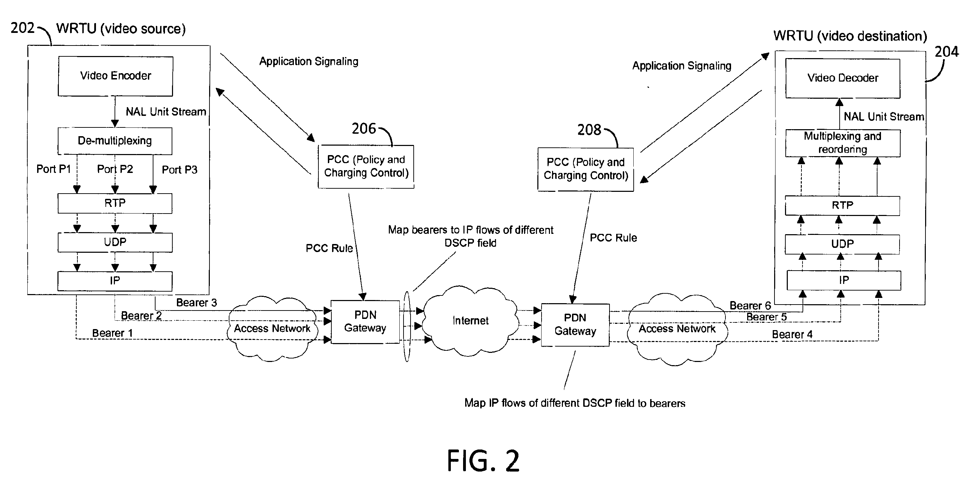

FIG. 2 illustrates an example system diagram for a system capable of transporting a plurality of packet sub-streams. Although FIG. 2 illustrates the transportation of video, it is to be appreciated that other data streams may be transported using similar techniques. Example video data may include video conferencing data, real-time video streaming, and/or other types of video streams. Although the video transmission from WTRU 202 to WTRU 204 is illustrated in FIG. 2, the video may be transmitted from a video server to a WTRU, from a WTRU to a video server, from a video server to another video server, and/or to/from any number of devices (*e.g*., point-to-point, multicast, etc.). In the example illustrated in FIG. 2, WTRU 202 and WTRU 204 may be located in two different LTE/System Architecture Evolution (SAE) networks, although the techniques described herein may be equally applicable if WTRU 202 and WTRU 204 are located in the same LTE/SAE. Furthermore, although logical communications between different entities are shown in FIG. 2, one or more entities and/or messages may be omitted for clarity and/or to simplify explanation.

In the example illustrated in FIG. 2, a video stream may be divided into three sub-streams. The video stream may be divided in order to achieve a desired level of differentiation for processing of video packets from the video encoder. The number of sub-streams may define the relative granularity of the packet differentiation. The WTRU may select the number of sub-streams to be used based on a desired level of differentiation in terms of packet QoS granularity. In other words, in order to increase differentiation in how different types of video packets are routed/processed, a larger number of sub-streams may be used. The video source-in this case WTRU 202 - may generate three sub-streams. A bearer may be established within the Access Network for each of the established sub-streams. To facilitate processing of the sub-streams, application signaling between WTRU 202 and the Policy and Charging Control (PCC) function 206 may include information regarding one of more of the sub-streams. A PCC function may be implemented in one or more of a Policy and Charging Rules Function (PCRF) and/or a Policy and Charging Enforcement Function (PCEF).

For example, the information regarding one or more of the sub-streams may include one or more of a QCI value extension, a representation of QoS properties of the sub-streams, the WTRU explicitly requesting a certain QoS and/or the like. Generally, PCC 206 (and/or PCC 208) may be configured to allow a network operator to control the QoS of one or more bearers based on the policies associated with the subscription service and/or to control the charging and billing for the services provided by the system. The de-multiplexing of a single video stream into multiple sub-streams in WTRU 202 may include one or more video packet separation and/or the exposing certain encoding information to allow packet differentiation at a relatively fine granularity. This information may be utilized in order to differentiate the QoS in the LTE/SAE network (*e.g*., the access network for the WTRU 202 and/or WTRU 204) during sub-stream processing. Based on the desired QoS level, one or more of the sub-streams may be routed/processed differently from another sub-stream even though they are part of the same video source. WTRU 204 may be configured to perform multiplexing of the sub-streams, packet reordering, video packet merging and/or the like.

In LTE/SAE, QoS provisioning may be based on the use of Evolved Packet System (EPS) bearers. An EPS bearer may be a virtual connection that provides a transport service with specific QoS attributes within the EPS/core network. In an UMTS network, the QoS provisioning may be associated with a corresponding Packet Data Protocol (PDP) context. An EPS bearer may be assigned a QCI value, for example to specify the QoS that the EPS bearer will receive. The QCI value may be a parameter associated with the QoS profile of an EPS bearer. The QCI value may be a scalar, for example which refers to access node-specific parameters that control bearer-level packet forwarding treatment (*e.g*., scheduling weights, admission thresholds, queue management thresholds, link layer protocol configuration, etc.). For example, the QCI value may indicate the type of packet and/or type of service associated with the packet (*e.g*., conversational voice, streaming video, signaling, best effort, etc). The QCI value may be used to determine one or more QoS attributes such as maximum delay, residual error rate, guaranteed bit rate (GBR), maximum bit rate (MBR), and/or the like. An EPS bearer that has a given QCI value may be associated with corresponding QCI characteristics such a resource type (*e.g*.., GBR or non-GBR), priority, packet delay budge, packet error loss rate, and/or the like. The 3GPP specification 3GPP TS 23.203, v11.1.0, "Policy and charging Control Architecture," (March 2011) may define nine values for QCI. Table 1 illustrates example services that may correspond to the nine QCI values.

**Table 1: Example QCI Values 1-9**

| **QCI** | **Resource Type** | **Priority** | **Packet Delay Budget** | **Packet Error Loss Rate** | **Example Services** |
|---|---|---|---|---|---|
| 1 | GBR | 2 | 100 ms | 10⁻² | Conversational Voice |
| 2 | | 4 | 150 ms | 10⁻³ | Conversational Video (Live Streaming) |
| 3 | | 3 | 50 ms | 10⁻³ | Real Time Gaming |
| 4 | | 5 | 300 ms | 10⁻⁶ | Non-Conversational Video (Buffered Streaming) |
| 5 | Non-GBR | 1 | 100 ms | 10⁻⁶ | IMS Signalling |
| 6 | | 6 | 300 ms | 10⁻⁶ | Video (Buffered Streaming) TCP-based (e.g., www, e-mail, chat, ftp, p2p file sharing, progressive video, etc.) |
| 7 | | 7 | 100 ms | 10⁻³ | Voice, Video (Live Streaming) Interactive Gaming |
| 8 | | 8 | 300 ms | 10⁻⁶ | Video (Buffered Streaming) TCP-based (e.g., www, e-mail, chat, ftp, p2p file |
| 9 | | 9 | | | sharing, progressive video, etc.) |

Out of these nine QCI values illustrated in Table 1, QCI=2 and QCI=7 may be applicable to real-time video applications, while the others may be associated with non-video or non-real-time video applications (*e.g*., buffered applications). For example, if H.264/AVC is used for video conferencing, the whole output stream of the video encoder may be treated with a single QoS level, according to either QCI=2 or QCI=7. The nine QCI levels defined in Table 1 may not allow differentiation of different types of video packets within the same output stream. Nevertheless, video packets may have differing levels of relative importance even if they are all from the same video encoder. As a result, the use of the nine QCI values identified in Table 1 without further granularity to differentiate individual packets within a given output stream may lead to poor video quality, especially in resource-constrained environments. Accordingly, more granular QoS levels for video may be used.

As an example, consider H.264/AVC video packets. Video packets output from a H.264/AVC encoder may be in the form of Network Abstraction Layer (NAL) Units (NALUs). A NALU may be configured to include one or more of video coding layer (VCL) information (*e.g*., compressed bits) and/or non-VCL information (*e.g*., extra information). A VCL NALU may be an Instantaneous Decoding Refresh (IDR) packet or a non-IDR packet. An IDR NALU may be a relatively important packet because IDR NALUs may be configured to serve as a reference packet for other packets within a video stream. Furthermore, if data partitioning is used, then Partition A, which may include information regarding motion estimation and the like, may be used to decode packets including information on Partition B, Partition C, etc. Hence, NALUs that include information regarding Partition A may be relatively important, for if a Partition A NALU is lost, the dependent NALUs of type Partition B and of type Partition C may be useless. The systems and methods described herein allow for the advanced communication system to treat different types of video packets differently (*e.g*., based on relative importance). As is to be appreciated, other codecs may also produce video packets having varying levels of relative importance which may be processed in accordance with the systems and methods described herein.

In an example, QCI values may be extended to support video codecs (such as H.264/AVC and/or H.254/SVC, for example) in a proprietary fashion. In other examples, the extended QCI values may be incorporated into applicable standards. Table 2 illustrates an example set of QCI extensions that may be used to provide increased granularity for QoS differentiation of packets within a packet flow. In the example illustrated in Table 2, the NAL Reference Identification (NRI) may be used to define additional QCI values for packets within a single flow and/or EPS bearer.

**Table 2: Example Extended QCI Values using the NRI**

| **QCI** | **Resource Type** | **Priority** | **Packet Delay Budget** | **Packet Error Loss Rate** | **Example Services** |
|---|---|---|---|---|---|
| 10 | | 3 | 100 ms | 10⁻³ | H.264/AVC priority NRI=11 |
| 11 | GBR | 5 | 150 ms | 10⁻³ | H.264/AVC priority NRI=10 |
| 12 | | 7 | 200 ms | 10⁻³ | H.264/AVC priority NRI=01 |
| 13 | | 9 | 300 ms | 10⁻² | H.264/AVC priority NRI=00 (lowest priority in H.264/AVC) |
| ... | | ... | ... | ... | ... |
| 20 | | | 100 ms | 10⁻⁴ | H.264/AVC priority NRI=11 |
| 21 | | 6 | 150 ms | 10⁻⁴ | H.264/AVC priority NRI=10 |
| 22 | Non-GBR | 8 | 200 ms | 10⁻⁴ | H.264/AVC priority NRI=01 |
| 23 | | 10 | 300 ms | 10⁻³ | H.264/AVC priority NRI=00 |
| ... | | ... | ... | ... | ... |

In the example illustrated by Table 2, a NRI value of 11 may correspond to the highest relative priority level of a NALU packet, while 00 may correspond to the lowest relative priority level of a NALU packet. For example, a value of NRI=11 may identify NALUs carrying a relatively important payload (*e.g*., a sequence parameter set and/or the like). NRI=10 may identify the next highest priority level, for example NALUs carrying payloads such as a sequence parameter set extension, for example. NRI=01 may identify the third highest priority value, for example NALUs that include a payload such as a Partition A. NRI=00 may identify the lowest priority level, for example NALUs that include a payload such as a non-IOR VCL. Other portions of the header (*e.g*., the NAL Unit Type) may be used to provide additional information about the packet, such as whether the packet is an IDR VCL NALU or not, the partition identification, etc.

As may be appreciated, other techniques may be used to identify the relative priority of the packet. For example, a more detailed QoS information may be provided and/or a finer granularity of video packet differentiation may be achieved if more than four values (*e.g.*, more than four NRI values) are used to identify the relative priorities. For example, bits in the NAL Unit Type field may provide an indication of the relative priority of a packet. Table 3 illustrates an example whereby the 5-bit nal_unit_type field included in an individual NALU may be used to differentiate the relative priority of a plurality of video packets.

**Table 3: Example Extended QCI Values using the nal_unit_type field**

| **QCI** | **Resource Type** | **Priority** | **Packet Delay Budget** | **Packet Error Loss Rate** | **Example Services** |
|---|---|---|---|---|---|
| 10 | | 3 | 100 ms | 10⁻³ | H.264/AVC nal_unit_type=5 |
| 11 | GBR | 5 | 150 ms | 10⁻³ | H.264/AVC nal_unit_type=2 |
| 12 | | 7 | 200 ms | 10⁻³ | H.264/AVC nal_unit_type=3 |
| 13 | | 9 | 300 ms | 10⁻² | H.264/AVC nal_unit_type=4 |
| ... | | ... | ... | ... | ... |
| 20 | | 4 | 100 ms | 10⁻⁴ | H.264/AVC nal_unit_type=5 |
| 21 | | 6 | 150 ms | 10⁻⁴ | H.264/AVC nal_unit_type=2 |
| 22 | Non-GBR | 8 | 200 ms | 10⁻⁴ | H.264/AVC nal_unit_type=3 |
| 23 | | 10 | 300 ms | 10⁻³ | H.264/AVC nal_unit_type=4 |
| ... | | ... | ... | ... | ... |

Thus, in accordance with the examples described herein, packets in a flow from a particular encoder may be provisioned differing QoS resources based on the relative priority and/or importance of the sub-stream of packets. For example, a particular flow may be demultiplexed into 1, 2, 3..., or n associated bearers, where n may be any positive integer. The packets may be assigned to an individual sub-stream based on a relative importance or priority of the packet. For example, an NRI value and/or a nal_unit_type field of a packet may be used to determine the appropriate sub-stream for the packet. In an example, the packets having the highest priority may be associated with a first bearer (*e.g*., the bearer with the highest relative QoS parameters), the packets having the next highest priority may be associated with a second bearer, and so forth.

However, rather than (or in addition to) differentiating the priority of packets based on a QCI value, additional methods and systems are disclosed for providing a flexible representation of QoS parameters for that may be used to determine the relative importance of a packet. For example, the use of QCI values alone may provide limited flexibility, as the QCI would be defined in advance and would be set at a certain number of quantized QCI values. In order to provide additional flexibility for new application and a greater level of QoS granularity, a more flexible representation of QoS parameters may be used. For example, a number of desired QoS parameters such as a maximum packet error rate, delay tolerance, desired throughput, maximum allowable jitter, maximum packet loss rate, minimum distance between packet losses, maximum packet size, minimum packet size, and/or the like may be used to define a QoS "hyperspace" or some other multi-axis arrangement that describes the desired QoS level of a packet based on those relative parameters.

For example, by expressing the range of assigned and/or desired QoS as a hyperspace spanned by a number of predefined bases (*e.g*.., the QoS parameters such as a maximum packet error rate, delay tolerance, desired throughput, maximum allowable jitter, maximum packet loss rate, minimum distance between packet losses, maximum packet size, minimum packet size, and/or the like), the packets may receive differentiated processing based on the values assigned to each of the bases and the application requirements. For example, each base or QoS parameter may represent a basic type of QoS requirement and may be referred to as an atomic QoS parameter. By determining the identities and/or weights of the atomic QoS parameters to be used for a given application, the QoS may be expressed as a point (*e.g*., characterized by its coordinates) in the hyperspace.

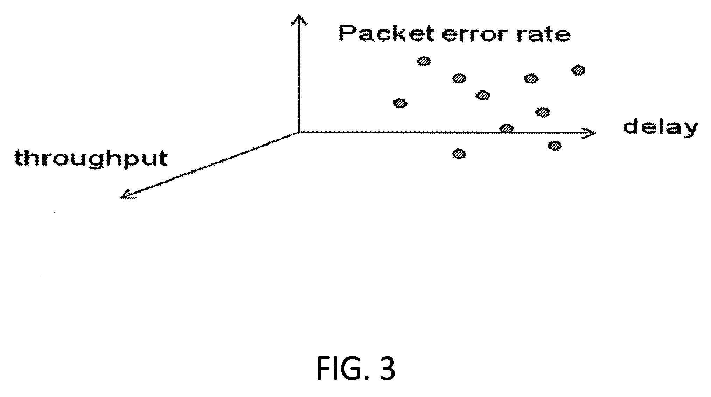

For purposes of explanation and illustration, consider a video coding example. In the example, the QoS parameters that may be most relevant for the video packets may be the maximum packet error rate, the maximum acceptable delay, and the minimum desired throughput. These three parameters may be considered the atomic QoS parameters for defining the QoS of an individual packet. FIG. 3 illustrates an example hyperspace that is based on the example atomic QoS parameters of maximum packet error rate, the maximum acceptable delay, and the minimum desired throughput. As illustrated in FIG. 3, there may be several points in the hyperspace, and each point may correspond to different combinations of the atomic QoS parameters (*e.g*.., different desired or assigned QoS requirements). Thus, rather than limiting a QoS value to a quantized number of predefined values, the QoS may be expressed as a function of the atomic QoS parameters that define the QoS hyperspace. Hence a first packet stream or sub-stream may be assigned a QoS value that corresponds to a first value of maximum packet error rate, a first value of maximum acceptable delay, and/or a first value of minimum desired throughput, while a second packet stream or sub-stream may be assigned a QoS value that corresponds to a second value of maximum packet error rate, a second value of maximum acceptable delay, and/or a second value of minimum desired throughput.

In an example, each point in the hyperspace may be mapped to a specified QCI value. Thus, in the example illustrated in FIG. 3, based on the desired value of maximum packet error rate, the desired value of value of maximum acceptable delay, and desired value of minimum desired throughput, a QCI may be determined that best matches the desired packet treatment. In an example, the set of atomic QoS parameters may be standardized such that the atomic QoS parameters may be understood and treated the same by all network operators. In this way, when a packet passes through multiple LTE/SAE networks, these networks can provide consistent QoS to that packet.

In an example, an EPS bearer may be associated with a given point or region (*e.g*., coordinates corresponding to specified values for the atomic QoS parameters) in the QoS hyperspace, and the network may be configured to allocate the EPS bearers to meet corresponding QoS requirements in the region of the hyperspace associated with that bearer. Additionally, although the three example atomic QoS parameters of maximum packet error rate, the maximum acceptable delay, and the minimum desired throughput may be used in the video encoding examples described herein, other parameters may be used and more or less than three atomic QoS parameters may be used to define the hyperspace. Additionally, although examples may be described in terms of video packets, non-video applications may also utilize the flexible definition of QoS requirements described herein.

For practical purposes, it may be important to reduce the number of bits used for representing the coordinates of the QoS hyperspace. For example, the atomic QoS parameters that serve as the bases for the hyperspace may be quantized in order to limit the number of values that may be used. As an example, the packet delay may be represented as three bits with a corresponding step size of 50 ms. Such an example representation is illustrated in Table 4. As may be appreciated, other quantization sizes may be used to increase or decrease granularity with regard to delay without departing from the scope of this disclosure. For example, more bits may be used to increase the delay granularity (*e.g*., reduce the step size) while fewer bits may be used to decrease the delay granularity (*e.g*., increase the step size).

**Table 4: Example of Quantization of the Delay QoS Parameter**

| Delay coordinate | 0 | 1 | 2 | 3 | 4 | 5 | 6 | 7 |
|---|---|---|---|---|---|---|---|---|
| Delay | Best effort | 50ms | 100ms | 150ms | 200ms | 250ms | 300ms | 350ms |

In an example, the packet error rate (PER) atomic QoS parameter may be represented as three bits, for example using exponential representation. Such an example representation is illustrated in Table 5. As may be appreciated, other quantization sizes may be used to increase or decrease granularity with regard to PER without departing from the scope of this disclosure. For example, more bits may be used to increase the PER granularity (*e.g*., reduce the step size) while fewer bits may be used to decrease the PER granularity (*e.g*., increase the step size).

**Table 5: Example of Quantization of the PER QoS Parameter**

| PER coordinate | 0 | 1 | 2 | 3 | 4 | 5 | 6 | 7 |
|---|---|---|---|---|---|---|---|---|
| PER | Best effort | 10⁻¹ | 5×10⁻² | 10⁻² | 5×10⁻³ | 10⁻³ | 5×10⁻⁴ | 10⁻⁴ |

In an example, the packet throughput atomic QoS parameter may be represented as three bits, for example using exponential representation. Such an example representation is illustrated in Table 6. As may be appreciated, other quantization sizes may be used to increase or decrease granularity with regard to throughput without departing from the scope of this disclosure. For example, more bits may be used to increase the throughput granularity (*e.g*., reduce the step size) while fewer bits may be used to decrease the throughput granularity (*e.g*., increase the step size).

**Table 6: Example of Quantization of the Throughput QoS Parameter**

| Throughput coordinate | 0 | 1 | 2 | 3 | 4 | 5 | 6 | 7 |
|---|---|---|---|---|---|---|---|---|
| Throughput (Mbps) | Best effort | 10⁻¹ | 5×10⁻¹ | 1 | 5 | 10 | 50 | 100 |

In the examples described above, best effort may correspond to no specific requirements. For example, for packets marked as best effort, the communication system may attempt to provide the best service available subject to current resources and/or policies. In other words, the network may not guarantee a minimum level of service with respect to a particular QoS parameter if the requirement is a best effort requirement. Examples of data that may utilize a best effort QoS requirement for one or more QoS parameters may include IP data such as webpages, some hypertext transfer protocol (HTTP) requests and responses, and/or other delay tolerant data.

In an example, a WTRU may be configured to explicitly signal or request desired QoS requirements and/or desired QoS parameter levels to the network. Generally, applications being executed by a WTRU, for example a video conferencing application, may determine or know QoS requirements and/or QoS parameter levels that will effectively support the transmission of application data over a communication network. Typically, the QoS requirements for EPS bearers in an LTE/SAE network may be derived by the PCC for the network. In other words, the WTRU may be passive in determining the QoS that it is going to receive from the system. Such approach may result in QoS that is different from what is desired by the WTRU and may lead to a poor allocation of network resources (*e.g*.., if the assigned QoS is greater than the QoS level that will achieve the desired transmission capabilities) and/or poor network performance as seen by the WTRU (*e.g*.., if the assigned QoS is less than the QoS level that will achieve the desired transmission capabilities). Moreover, if the WTRU is unable to signal a desired QoS level, the 3GPP communication networks may be unable to maintain up-to-date systems for supporting innovations included in new video applications and/or video codecs, since updating the 3GPP standard functionality is a relatively slow process. By allowing the WTRU to signal a desired QoS level, the slow changes in the 3GPP standards to support the new innovations may be avoided.

In an example, the WTRU may explicitly inform the LTE/SAE network of its desired QoS requirements. The LTE/SAE network may then determine the appropriate (*e.g*., the best, one of the best possible, most appropriate) QoS parameter(s) to assign to the WTRU. For example, the network may determine what QoS parameters to assign to the WTRU based on the services allowed by the subscription service of the WTRU requesting the connection. One or more messages from a WTRU to a PCRF of the PCC architecture may include the request for a given QoS level. The PCRF may be configured to handle the explicit QoS requests received from one or more WTRUs. In an example, to ensure backwards compatibility, the WTRU may utilize the existing signaling scheme to send one or more QoS requests. In an example, the WTRU may utilize certain parameters in the existing signaling to indicate a request for a desired QoS level without explicitly specifying QoS level that is desired.

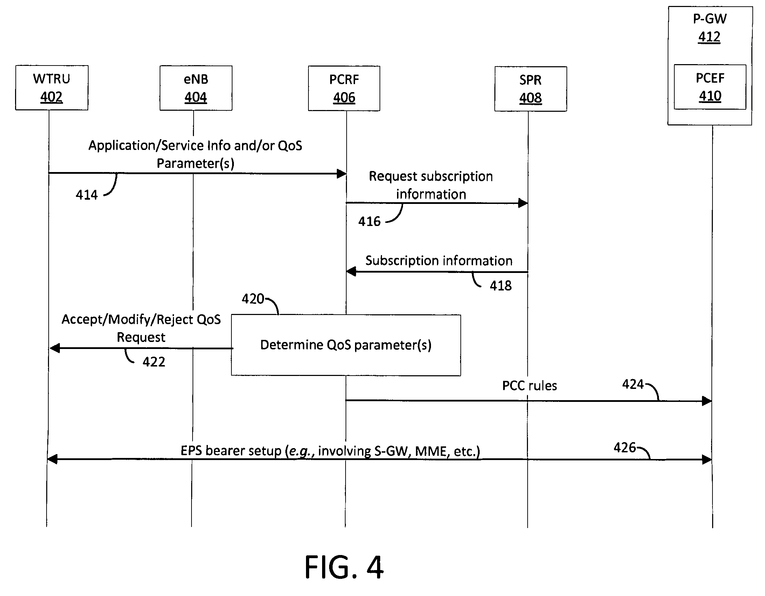

FIG. 4 illustrates an example process for establishing an EPS bearer using an QoS request by a WTRU. WTRU 402 may attempt to connect to an LTE network, for example via eNB 404. As part of the connection process, one or more EPS bearers may be established to support the connection for WTRU 402. As part of the bearer establishment process, at 414 WTRU 402 may send one or more of application information, service information, and/or requested QoS parameter(s) for the connection to PCRF 406 (and/or other PCC nodes). For example, WTRU 402 may request desired QoS parameter values such as a desired bit rate, delay, bit error rate (*e.g*.., GBR, MBR, etc.), block error rate, QCI value, QoS hyperspace coordinate and/or other QoS parameters determined to be appropriate for the requested bearer.

In an example, WTRU 402 may explicitly specify desired QoS parameters for one or more service data flows (SDFs). For example, for a first SDF, WTRU 402 may indicate one or more of a source IP address, a destination IP address, a source port number (*e.g*., source port 3721), a destination port number (*e.g*., destination port 4892), a protocol type (*e.g*.., 17 for UDP), and/or one or more QoS parameters. For example, WTRU 402 may indicate that the desired QoS parameters for the first SDF are a delay that is less than 100 ms and/or a packet loss error rate (PLER) of less than 10⁻³. In an example, for a second SDF, WTRU 402 may indicate one or more of a source IP address, a destination IP address, a source port number (*e.g*., source port 3722), a destination port number (*e.g.,* destination port 5897), a protocol type (*e.g..,* 17 for UDP), and/or one or more QoS parameters. For example, WTRU 402 may indicate that the desired QoS parameters for the second SDF are a delay that is less than 200 ms and/or a packet loss error rate (PLER) of less than 10⁻². The QoS parameter requests for the first SDF and the second SDF may be included in the same or different messages from WTRU 402.

In order to facilitate the determination of what QoS parameters are appropriate for WTRU 402, PCRF 406 may request subscription for WTRU 402 from Subscriber Profile Repository (SPR) 408 at 416. SPR 408 may include a database of subscription information, including subscription information for WTRU 402. At 418, SPR 408 may reply to PCRF 406, and the reply may include subscription information for WTRU 402.

In an example, at 420 PCRF 406 may determine appropriate QoS parameters for the bearer(s) being established for WTRU 402. For example, PCRF 406 may determine the appropriate parameters based on one or more of application information, service information, requested QoS parameter(s), subscription information, and/or other information regarding WTRU 402. In an example, PCRF 406 may first determine whether WTRU 402 has requested specific QoS parameters at 414. If so, PCRF 406 may determine QoS parameters (*e.g*., QCI, GBR, MBR, and/or the like) that correspond to the QoS parameters request by WTRU 402. In other words, PCRF 406 may attempt to identify the QoS parameters that most closely match the QoS parameters requested by WTRU 402 and/or fulfill the request made by WTRU 402. If the determined QoS parameters are allowed by the subscription service of the WTRU 402, a bearer with the corresponding QoS parameters may be allocated to WTRU 402. However, PCRF 406 may determine that the QoS parameters requested by the WTRU are not supported according to the subscription information for WTRU 402. If so, PCRF may determine the QoS parameters to allocate for the requested bearer based on other factors such as the application information provided by WTRU 402, the service information provided by WTRU 402, and/or the subscription information for WTRU 402.

In order to prevent WTRUs from improperly requesting resources that consume more network resources than are appropriate for a given application (*e.g*.., requesting a maximum delay of no more than 100 ms when a delay of 200 ms may have little to no effect on application performance) and/or to ensure that the network operators generate appropriate fees for the services provided to a WTRU, the PCC function may allow, modify, and/or reject the QoS requirements requested by WTRU 402. For example, the decisions whether to accept, modify, and/or reject the request based on the allowed services for the subscriber and/or other policies.

For example, at 422, PCRF 406 may send a message to WTRU 402 accepting, modifying, or rejecting the QoS request. The message may include one or more of an ID for the WTRU, an SDF ID, the QoS decision or cause (*e.g*., accept, modify, reject, etc.), and/or an indication of the QoS parameters that were assigned to the WTRU. For example, if the QoS parameters requested at 414 were accepted by PCRF 406, an accept message may be sent to WTRU 402. If the QoS parameters requested at 414 were modified by PCRF 406, a modify message may be sent to WTRU 402. In the event of modification, the determined QoS may be provided and/or the associated charging information may be included. The modify message may indicate what parameters were changed and/or what QoS parameters were allocated to the WTRU. If the QoS parameters requested by WTRU 402 were rejected, a reject message may be sent to WTRU 402. In the event of rejection, suggested QoS parameters may be provided and/or the associated charging information may be included. If an explicit QoS request is rejected, the WTRU may revise the original QoS request and send a new request.

Once PCRF 406 has identified the appropriate QoS parameters for the SDFs indicted by WTRU 402 (*e.g*.., based on the request and/or WTRU subscription information received from SPR 408), PCRF 406 may send information regarding SDF identities and/or the associated QoS parameters that were selected for WTRU 402 to the PCEF 410. For example at 424 PCRF 406 may send PCC rules to PCEF 410 and/or packet gateway (P-GW) 412. The PCC rules may include the QoS parameters requested by WTRU 402 and/or an indication of the QoS parameters allocated for the bearer to be created for WTRU 402.

PCEF 410 and/or P-GW 412 may then initiate the establishment of dedicated EPS bearers based on the request by WTRU 402 at 426. The details of EPS bearer setup are not shown in FIG. 4, although one or more entities that are not shown (*e.g*.., a Serving Gateway (S-GW), a Mobility Management Entity (MME), etc.) may be involved in the bearer establishment even though they are not shown in FIG. 4. Upon EPS bearer establishment, the SDFs may be transported through the core network via the created EPS bearers. In an example, multiple SDFs may be associated with similar QoS requirements, and hence may be assigned to the same EPS bearer.

As packets are separated from a flow based on their individual relative priority, when the packets arrive at the destination WTRU, the packets may arrive out-of-order. For example, the source and/or destination WTRU may separate, merge, and/or reorder the received packets. Packet separation may include separating a packet stream (*e.g*.., video traffic) into two or more sub-streams according to the relative importance of different types of packets at the packet source. The separation may be maintained throughout the transmission network, facilitating packet identification during routing and/or merging. Two example methods that may be utilized for packet separation may include the use of multiple port numbers and/or the use of certain fields in the IP packet headers for identification.

The methods of separating an application stream into multiple sub-streams, merging sub-streams, and/or reordering packets may be applied by LTE/SAE systems and/or other advanced communication systems. The application data may be video data and/or other applications where different types of packets have different relative importance. Example video codecs for which the video stream separation, merging, and/or reordering may be applied include H.264/AVC, H.264/SVC, and/or other video codecs that permit the video packets to be separated at the application layer according to their relative importance.

The multiplexing/merging of the sub-streams and/or the reordering the individual packets may occur at the receiver. Since each sub-stream may be routed by the network independently of the other sub-streams, the packets may arrive out-of-order at the destination due to different transmission paths and/or transmission processing. Re-ordering may be performed in order to re-align the packets into their original order as reflected prior to separation into the multiple sub-streams.

In an example, when the video application sends one or more NAL Units to the real-time transport protocol (RTP) layer for transmission, the RTP packet format may be used to preserve information regarding the type of NAL Units being transmitted and/or other identifying information for the video packet. For example, in the RTP packet header there is a field called the Payload Type (PT), which may be seven bits long. There is a range of values, for example values from 96 to 127, that may be used to dynamically assign identifier values, for example through a conference control protocol. These values may be used to identify different types of video packets for video codecs *(e.g..,* H.264/AVC). For example, a first value (*e.g*., the value 96) may be assigned to a H.264/AVC packet with priority NRI=11, a second value (*e.g*., the value 97) may be assigned to a H.264/AVC packet with priority NRI=10, a third value (*e.g*., the value 98) may be assigned to a H.264/AVC packet with priority NRI=01, a fourth value (*e.g*., the value 99) may be assigned to a H.264/AVC packet with priority NRI=00, and so on. The values expressed above are examples, and other PT values may be used. In an example, a first value (*e.g*., the value 96) may be assigned to a H.264/AVC packet with nal_unit_type=5 (*e.g*.., IDR), a second value (*e.g*., the value 97) may be assigned to a H.264/AVC packet with nal_unit_type=2 (Partition A), a third value (*e.g*., the value 98) may be assigned to a H.264/AVC packet with nal_unit_type=3 (Partition B), a fourth value (*e.g*., the value 99) may be assigned to a H.264/AVC packet with nal_unit_type=4 (Partition C), and so on.

Using such an approach, an identifier for the packet and/or packet type (*e.g*.., the type of NAL Units) may be included in the RTP packet header. When the RTP packets are sent to lower layers for transmission, multiple UDP sockets may be opened. Each opened socket may correspond to a different type of RTP packet and/or a different packet priority. By doing so, the sockets may each correspond to different types of NAL Units. Since each RTP packet may be treated as a whole in the advanced communication system, different types of NAL Units may be refrained from being included in a single RTP packet.

On the receiver side, the multiple sub-streams may be merged into a single stream for the video decoder. The receiver WTRU may be configured to perform the merge. In an example, the splitting of the stream and/or the merge of the sub-streams may be performed by introducing a middleware between the video codec and RTP packet encoder. In an example, the the splitting of the stream and/or the merge of the sub-streams may be performed by enhancing RTP encoding protocol, for example to include one or more identifiers for the packet. When the sub-streams are merged at the receiver, the merged video packets may be out of order. Therefore, reordering may be performed prior to the video packets being input to the video decoder.

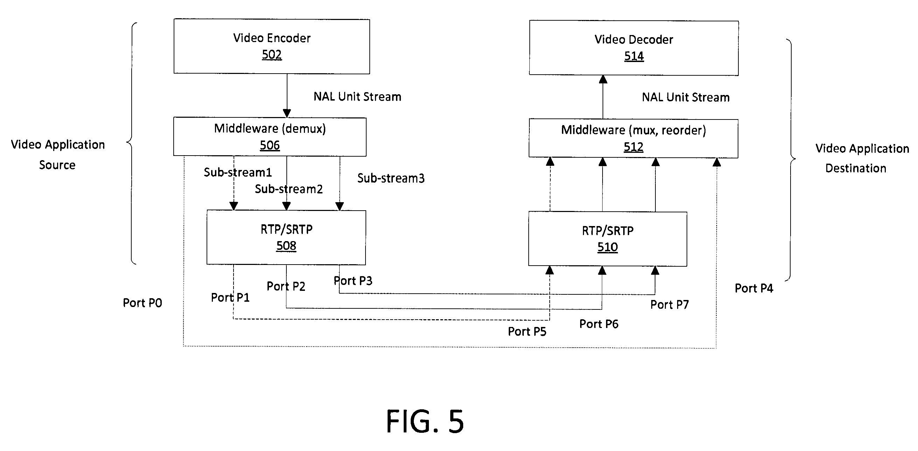

FIG. 5 illustrates an example protocol stack for video packet separation, merging, and/or reordering using a middleware module. For example, Middleware 506 may be include in the video application source and may be configured to perform video separation. Middleware 512 may be included in the video destination application and may be configured to perform merging and/or reordering of the packets. For example, the video application source and the video application destination may establish a video session (*e.g*., a streaming video session). During or after session establishment, Middleware 502 and Middleware 512 may exchange parameters for the video packet separation, merging, and/or reordering to be used to support the video session. To facilitate the video packet processing, Middleware 506 may establish a port or socket for communication with Middleware 512 (*e.g*.., Port P0). For example, the port may be a TCP or UDP port. Similarly, Middleware 512 may establish a port or socket for communication with Middleware 506 (*e.g..,* Port P4). For example, the port may be a TCP or UDP port. However, other types of transport protocols may be used such as structured stream transport (SST), stream control transmission protocol (SCTP), datagram congestion control protocol (DCCP), explicit Congestion Control Protocol (XCP), and/or the like.

The middleware entities (*e.g*., Middleware 506 and Middleware 512) may determine the number of sub-streams to use in order to transport the video packets received from Video Encoder 502 and to be sent to Video Decoder 514. In an example, as illustrated in FIG. 5, three sub-streams may be established in order to send the video packets, although more or fewer sub-streams may be used. The video application source and/or the video application destination may establish a port or socket for each of the sub-streams. For example, the video application source may establish Ports P1, P2, and P3 to send the video packets via three sub-streams. RTP/SRTP 508 may be an entity configured to send the subs-streams from the video application source. Although the example described with respect to FIG. 5 uses an RTP or SRTP protocol for sending the plurality of sub-streams (*e.g*.., using UDP ports or some other transport protocol), other types of streaming protocols may be used (*e.g*.., real-time streaming protocol (RTSP), Microsoft Media Server (MMS), etc.). The video application source may establish Ports P5, P6, and P7 to receive the video packets via three sub-streams, for example via RTP/SRTP entity510. In an example, the ports may be UDP ports, although other transport protocols may also be used.

Default settings may be used for establishing the number sub-streams and/or the type of packets associated with each of the sub-streams, for example in the absence of explicit control parameters that are exchanged between the video application entities. In an example, the user may be presented with an interface and may supply an indication of the desired quality. As the requested quality increases, the number of ports/sub-streams that are opened may increase, for example to provide increased granularity in the processing of different types of video packets. Such an approach may incorporate the PCC function to confirm the requested streaming functionality is allowed according to the subscription plan for the user.

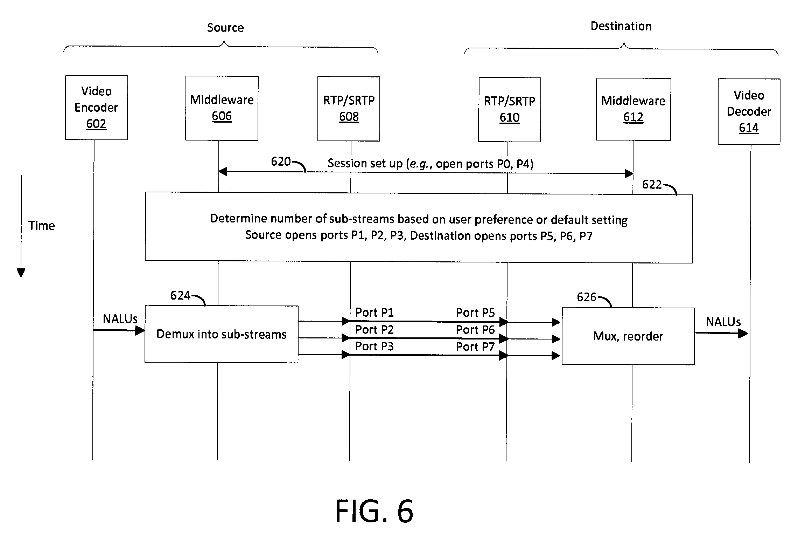

FIG. 6 illustrates an example procedure for video packet separation, merging, and/or reordering using a middleware approach. For example, at 620 the video session may be established between the video source and the video destination. Middleware 602 and Middleware 612 may exchange parameters for the video packet separation, merging, and/or reordering to be used to support the video session. To facilitate the video packet processing, Middleware 606 may establish a port or socket for communication with Middleware 612 (*e.g..,* Port P0). For example, the port may be a TCP or UDP port. Similarly, Middleware 612 may establish a port or socket for communication with Middleware 606 (*e.g..,* Port P4). For example, the port may be a TCP or UDP port. However, other types of transport protocols may be used such as SST, SCTP, DCCP, and/or the like.

At 622, Middleware 606 and/or Middleware 612 may determine the number of sub-streams to use, for example based on user preferences and/or default setting. For example, Middleware 606 and/or Middleware 612 may determine the number of different types of NALUs that will be used for the video session. Based on the determination regarding the number of streams to uses, an appropriate number of ports or sockets may be established in order to transport the sub-streams via individual sockets. For example, the video source may open ports P1, P2, and P3, and the video destination may open ports P5, P6, and P7. The sockets/ports opened for the different sub-streams may be associated with different QoS parameters and the packets included in a sub-stream may be routed in the transmission network in accordance with the QoS parameters associated with the socket for that sub-stream.

Video Encoder 602 may begin generating NALUs that include video data. Upon receiving the NALU stream from Video Encoder 602, at 624 Middleware 606 may divide the NALU stream into one or more sub-streams, for example based on the relative importance and/or desired QoS of the packets within the NALU stream. In the example illustrated in FIG. 6, the NALU stream may be split into three sub-streams. In an example, Middleware 506 may divide/separate the NALU stream into the three sub-streams based on the type of NALU, for example by inspecting the NRI (*e.g.,* may be two bits) and/or NAL Unit type field (*e.g.*., may be five bits) of the packets included in the NALU stream. The appropriate sub-stream may be determined based on the value of the fields that indicate the type of NALU (*e.g*.., NRI and/or NAL unit type).

Middleware 606 may label the packets in the sub-stream or otherwise indicate how the packets have been separated into the sub-streams for re-ordering at the video application destination. For example, Middleware 606 may add a header to the packets within the NALU stream that includes a sequence number. The sequence number may indicate a relative order of the packets prior to separation into the plurality of sub-streams. The sequence number may be assigned to the RTP/SRTP packets in such a way that the order of the NALUs is preserved. During the RTP/SRTP encapsulation, some or all of the sub-streams may share a single sequence number space, and the shared sequence number space may be used for re-ordering of the plurality of sub-streams at the receiver. In an example, rather than adding its own header, Middleware 606 may send the sequence number and/or an indication of the sequence number for a given packet to RTP/SRTP entity 608. RTP/SRTP entity 608 may include the sequence number in the RTP/SRTP header for the video packet. For example, RTP/SRTP entity 608 may indicate in the RTP packet header that an extended header (*e.g*., sequence number) has been included between the standard RTP header and the RTP payload field. The indication of the extended header may be indicated using the X (extension) field in the RTP header. In another example, the Payload Type (PT field may be used to indicate the sequence number. RTP/SRTP entity 608 may send each of the sub-streams to the video application destination. For example, each sub-stream may be associated with a separate socket or port (*e.g*., UDP socket or port).

The sub-streams may be received via RTP/STRP 610 and sent to Middleware 612. At 626 Middleware 612 may merge and/or reorder the received packets, for example based on the sequence numbers that were added to the packets during packet separation. The reordering may be performed based on these sequence numbers and then the sequence numbers may be removed from the packet prior to passing the reconstructed NALU stream to Video Decoder 614. In an example, for the many video applications, other streams such as those dedicated for audio may be generated as well. These other streams may also be sent with the video data sub-streams.

One or more approaches may be used when reordering the video packets during the multiplexing process at the video application destination. For example, the middleware at the video source may add a header to each NAL unit. The header may include a unique sequence number, and this unique sequence number may be used at the video destination for packet reordering. In an example, the middleware may utilize the sequence number field of the RTP packet header such that that some or all of the RTP/SRTP sub-streams share the same sequence number space. At the video destination, the sequence number in the RTP packet header may then be used for reordering. In order to avoid different types of NALUs from being encapsulated within the same RTP/SRTP packet when the RTP/SRTP header information includes the unique sequence number that is assigned to the packets in each of the sub-streams, in an example each RTP/SRTP packet is configured to include a single NALU. In another example, rather than or in addition to using a unique sequence number, a timestamp may be used for packet reordering. For example, each NALU at the video encoder may be marked with a timestamp, and the video decoder application may utilize the timestamp to reorder the packets that are received via the multiple sub-streams.

For the purpose of backwards compatibility, the middleware at the source and/or destination (*e.g*.., Middleware 606 and/or Middleware 612) may determine whether the video peer application/device supports the use of the sub-stream processing middleware and/or includes installed sub-stream processing middleware. If the peer device (*e.g*., the other party to the video streaming session) does not include the appropriate middleware and/or does not support sub-stream NAL unit differentiation, the middleware that is installed on the other device may act as a pass-through entity. For example, the middleware may simply pass the unmodified/non-encapsulated NALU stream from the video encoder to the RTP/SRTP entity (*e.g*., video source side) or pass the unmodified/non-encapsulated NALU stream from the RTP/SRTP entity to the video decoder (*e.g*., video destination side).

In an example, the RTP and/or SRTP (and/or some other video streaming protocol) may be modified in order to support/perform one or more functions such as video packet separation, video packet merging, and/or video packet reordering. Such functionality may be referred to a s RTP video profile.

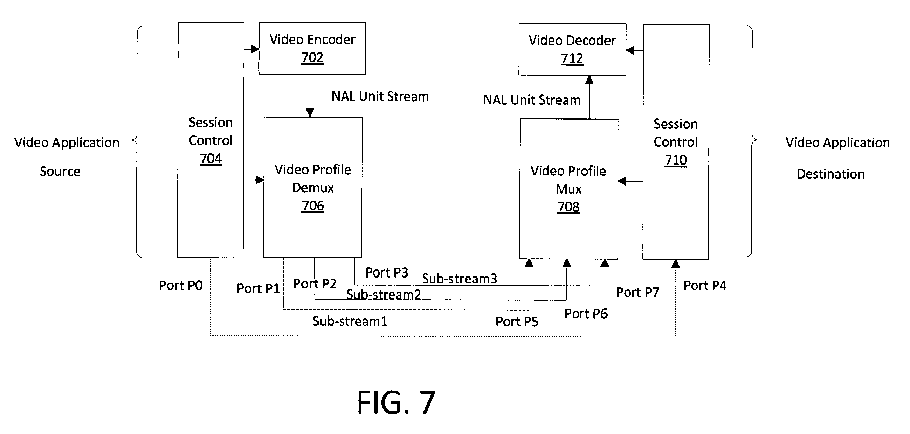

FIG. 7 illustrates an example approach for enhancing the RTP in order to perform one or more of video packet separation, video packet merging, and/or video packet reordering. Session Control 704 and/or Session Control 710 may establish a streaming video session between a video application source and a video application destination. Upon establishing the session, video packets (*e.g*.., a NAL Unit stream) may be output from Video Encoder 702 to be transmitted to the video application destination. Video Profile Demux 708 may inspect the packets include in the NAL Unit stream output from Video Encoder 702. For example, Video Profile Demux 706 may be an RTP/SRTP entity that is enhanced to inspect NALU packet type and/or NALU packet priority. In an example, Video Profile Demux 706 may determine the NALU type information (*e.g*., in a similar manner as described above for the middleware-inspect NRI, NAL unit type field, etc.) and may separate/demultiplex the NALU stream into a plurality of sub-streams based on the relative priority of the packets and/or type of NALU. Video Profile Demux 706 may insert a timestamp and/or sequence number to the packets for each of the sub-streams. For example, the existing 32-bit timestamp field in the RTP packet header and/or the 16 bit sequence number field may be used for this purpose and/or another timestamp/sequence number may be generated. The sub-streams may then be sent to the video application destination.

On the receiver side, the sub-streams may be received by Video Profile Demux 708, which may be an RTP/SRTP entity that is enhanced to merge and/or reorder the plurality of sub-streams for example based on the timestamps and/or sequence numbers of the packets include in the sub-streams. The merged NAL Unit stream may then be sent to Video Decoder 712 for further processing.

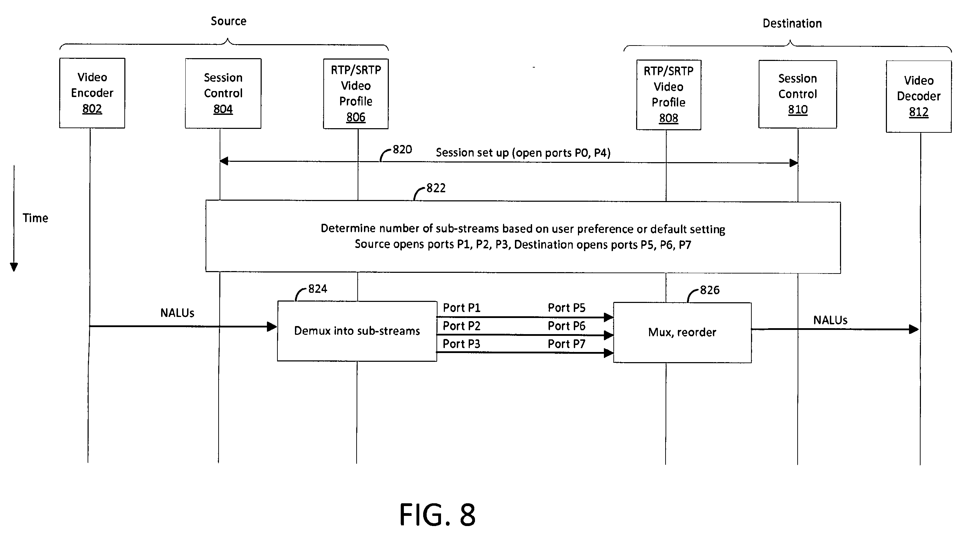

FIG. 8 illustrates an example procedure for video traffic separation, merger, and/or reordering using an RTP Video Profile approach. For example, at 820 the video session may be established between Session Control 804 and Session Control 810. In an example, Session Control 804 and Session Control 810 may exchange parameters for the video packet separation, merging, and/or reordering to be used to support the video session. To facilitate the video packet processing, Session Control 804 may establish a port or socket for communication with Session Control 810 (*e.g*.., Port P0). For example, the port may be a TCP or UDP port. Similarly, Session Control 810 may establish a port or socket for communication with Session Control 804 *(e.g..,* Port P4). For example, the port may be a TCP or UDP port. However, other types of transport protocols may be used such as SST, SCTP, DCCP, XCP, and/or the like.

At 822, Session Control 804 and/or Session Control 810 may determine the number of sub-streams to use, for example based on user preferences and/or default settings. For example, Session Control 804 and/or Session Control 810 may determine the number of different types of NALUs that will be used for the video session. Based on the determination regarding the number of streams to uses, an appropriate number of ports or sockets may be established in order to transport the sub-streams via individual sockets. For example, the video source may open ports P1, P2, and P3, and the video destination may open ports P5, P6, and P7. The sockets/ports opened for the different sub-streams may be associated with different QoS parameters and the packets included in a sub-stream may be routed in the transmission network in accordance with the QoS parameters associated with the socket for that sub-stream.

Video Encoder 802 may begin generating NALUs that include video data. Upon receiving the NALU stream from Video Encoder 802, at 624 RTP/SRTP Video Profile 806 may divide the NALU stream into one or more sub-streams, for example based on the relative importance and/or desired QoS of the packets within the NALU stream. In the example illustrated in FIG. 8, the NALU stream may be split into three sub-streams. In an example, RTP/SRTP Video Profile 806 may divide/separate the NALU stream into the three sub-streams based on the type of NALU, for example by inspecting the NRI (*e.g*., may be two bits) and/or NAL Unit type field (*e.g*.., may be five bits) of the packets included in the NALU stream. The appropriate sub-stream may be determined based on the value of the fields that indicate the type of NALU (*e.g*.., NRI and/or NAL unit type).

RTP/SRTP Video Profile 806 may label the packets in the sub-stream or otherwise indicate how the packets have been separated into the sub-streams for re-ordering at the video application destination. For example, RTP/SRTP Video Profile 806 may use the timestamp filed and/or sequence number field of the RTP/SRTP packet as an indicator of the relative order of the packets in the plurality of sub-streams. The sequence number/timestamp may be assigned to the RTP/SRTP packets in such a way that the order of the NALUs is preserved and may be used by the receiver to recreate the original NALU stream. During the RTP/SRTP encapsulation, some or all of the sub-streams may share a single sequence number space, and the shared sequence number space may be used for re-ordering of the plurality of sub-streams at the receiver.

The sub-streams may be received via RTP/SRTP Video Profile 808. At 826 RTP/SRTP Video Profile 806 may merge and/or reorder the received packets, for example based on the sequence numbers/timestamps that were added to the packets during packet separation. The reordering may be performed based on these sequence numbers and then the sequence numbers may be removed from the packet prior to passing the reconstructed NALU stream to Video Decoder 812. In an example, for the many video applications, other streams such as those dedicated for audio may be generated as well. These other streams may also be sent with the video data sub-streams.

In an example, rather than or in addition to utilizing one or more of the techniques for sending an indication of the relative priority of a packet in a video stream described above (*e.g*., using middleware and/or an RTP/SRTP Video Profile), information fields in the IP packet header of video packets may be utilized. For example, if the identifier used to determine the relative importance of a video packet is also included in that IP packet header, intermediate routers within the transmission network may be able to access and determine the indication of the relative importance/type of packet. In order to avoid inspecting the payload portion of IP packets that include a NALU, the identifier that indicates the relative importance of the packet may also be included in the IP header in rather than or in addition to the NALU header. Such an approach may alleviate difficulties in inspecting IP packet payloads that have been encrypted, for example, as may be the case if the IP packet payload is encrypted using the common ESP mode associated with IPSec. For example, such an approach may be used if the port number is part of the packet identifier.

With respect to IPv4, the NRI and/or NAL Unit payload type field included in the NAL unit header may include an indication of the relative importance of the NALU unit and/or type of NALU. Rather than or in addition to opening multiple sockets (*e.g*., UDP sockets) the video source may open a single socket for the transmission of each of the sub-streams. The video source may then encapsulate RTP packets that include the NALUs into UDP packets, and put UDP packets of different types (*e.g*., including different types of NALUs) into different respective buffers. The video source may then encapsulate the UDP packets into IP packets with a distinctive differentiation services code point (DSCP) value for each respective UDP buffer/NALU type.

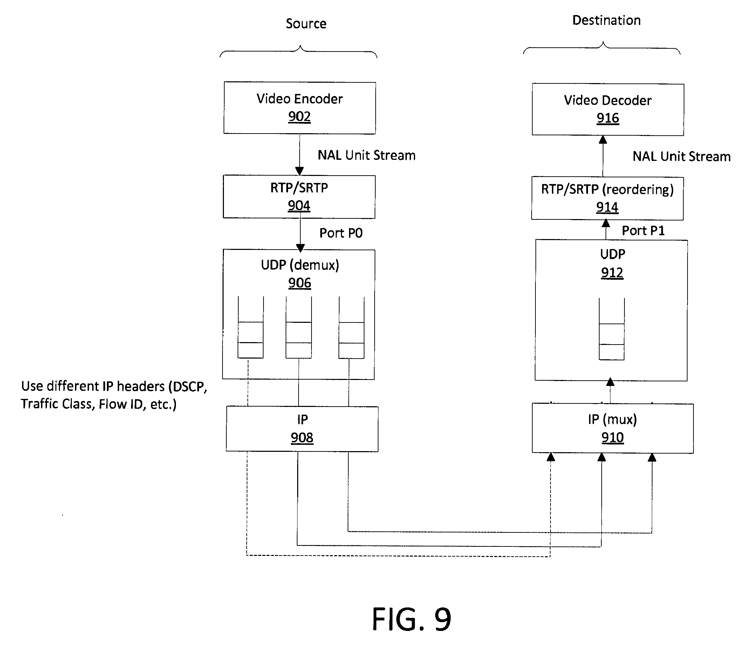

FIG. 9 illustrates an approach where IP packets may include the information used for one or more of video packet separation, merging, and/or reordering. For example, Video Encoder 902 may output of NAL Unit video packet stream, which may be received by RTP/SRTP entity 904. RTP/SRTP entity 904 may include an indication of the type of NALU and/or the relative importance of the NALU in the RTP packet header, for example, in the payload type field. RTP/SRTP entity 904 may also include a sequence number and/or time stamp that may be used for reordering the packets at the receiver. The type of NALU and/or the relative importance of the NALU may be determined based on the NRI field, the NAL Unit type field, and/or some other field in the NALU header. RTP/SRTP entity 904 may open a socket connection for the video transmission. UDP entity 906 may receive the RTP/SRTP stream that includes the NALUs from RTP/SRTP entity 904. UDP entity 906 may encapsulate the RTP/SRT packets in UDP packets of different types, for example that are associated with different buffers. By associating the different types ofNALUs with different UDP buffers, an effective separation of the video packets into a plurality of sub-streams may be achieved.

The UDP packets may then be sent to IP entity 908. IP entity 908 may then encapsulate the UDP packets into IP packets. One or more fields in the IP packet may be configured to include an indication of the NALU type and/or relative importance of the underlying NALU encapsulated with the IP packet. For example, for IPv4 the DSCP field may be used to indicate the relative importance or the packet and/or the type of NALU encapsulated in the IP packet, although other fields in the IP header may also be utilized.

When the IP packets are sent over the transmission network, routers within the transmission network may determine the relative importance of the packet and/or the type of NALU encapsulated in the IP packet based on the modified field in the IP packet header (*e.g*., the DSCP field). The routers may use this information to route the packets according to the desired QoS of the associated NALUs. Upon egress from the transmission network at the video destination, IP entity 910 may be configured to multiplex the encapsulated UDP packets in order to pass the video packet stream to UDP entity 912. UDP entity 912 may de-encapsulate the RTP/SRTP packets and send them to RTP/SRTP entity 914. RTP/SRTP entity 914 may use the sequence number and/or time stamp included in the RTP/SRTP packets to reorder the NALU video stream. The reorder NALU video stream may then be sent to Video Decoder 916 for decoding.

If the information regarding the relative importance and/or type of NALU is included in the IP packets, the EPS bearer setup for transmission over an LTE network may be modified. For example, PCC entity (*e.g*., a PRCF) may inform a P-GW of the identity of the service data flow. The PREF of the P-GW may inspect the DSCP field during packet routing, for example by identifying the source IP address and the destination IP address of each passing IP packet in order to identify the service data flow. During routing, the P-GW may map the service data flow to an existing EPS bearer or may initiate the setup of a new EPS bearer. In either case, the service data flow may be mapped to an EPS bearer, and the mapping may be made known to the WTRU.

Once the mapping from the service data flow to the EPS bearer is determined, the EPS bearer may be further mapped to logical channels to enable the MAC scheduler to differentiate services and/or QoS for different types of packets. To facilitate efficient and prioritized transmission from the video application at the source WTRU (*e.g*.., the video encoder), the P-GW may send the mapping between the SDF identifier (*e.g*., DSCP field, etc.) and the EPS bearer to the source WTRU to facilitate the identification of the later established EPS bearer at the WTRU. The UDP module of the WTRU may use this mapping in order to determine which UDP buffers a given packet should be assigned to during video transmission.

Rather than or in addition to the DSCP field, if IPv6 is used for transmission, additional fields may be configured to include information regarding the type of underlying NALUs and/or their relative importance. For example, one or more of the DSCP, Traffic Class, and/or Flow ID fields may be used to carry this information. The procedure for doing so is similar to that of using the DSCP field for IPv4 packets. For example, the UDP packets in different buffers may be encapsulated in IP packets with different Traffic Class values and/or different Flow ID values. In this way, the routers within the transmission network may identify different types of video packets by inspecting one or more of these fields of the IP packets, possibly with additional information such as the source IP address and the destination IP address.

When mapping from the IP packet header fields to the QoS levels (*e.g*., indicated by the QCI values in the case of LTE/SAE), the mapping may be dynamic and/or static. In the static case, signaling indicating the type of mapping being used may omitted. In the dynamic case, the UE may inform the network of the desired mapping, and the network may accept, modify, and/or reject the proposed mapping to prevent the terminals (e.g., WTRUs in the case of LTE/SAE) from abusing the use of network resources and/or to ensure appropriate charging of the services that the network provides.

In an example, additional information regarding the type of a video packet may be exposed to the communication system so that the communication system may have more flexibility in customizing the delivery methods for video packets. For example an example with respect to the H.264/AVE video codec, there may be one or more fields in the video packet (*e.g*., NAL Unit) header that may be used to indicate the type of the video packet (*e.g*., the 2-bit NRI field, and the 5-bit NAL Unit Type field, etc.). However, the video packets may be further classified based on the slice_type information, which may be associated with 10 different potential values. For example, the different values of the slice_type information may represent types such as a P slice, a B slice, an I slice, an SP slice, SI slice, etc. This information may be included in the payload of the NAL Units.

Classifying NALUs by slice_type may facilitate more efficient routing and/or more differentiated QoS control for certain video applications and/or certain communication systems. For example, exposing such information may allow the communication system to offer potentially better QoS for different slice_types. A few additional bits may be added to the NALU header to indicate this information and/or the definitions of the 5-bit NAL Unit Type field may be modified in order to convey the slice_type information. This information may be included in NALU headers for video codecs such as H.264/AVC, H.264/SVC, H.265, and/or other video codecs.

As described herein, one or more of the following methods or procedures may be used to facilitate the differentiated QoS service for video packets within a single video stream. For example, the QCI values for LTE/SAE may be extended. Extending the QCI values may increase the range of QCI values beyond the currently standardized 9 values to accommodate H.264/AVC and other video codecs. In an example, a flexible representation of QoS requirements/parameters may be used. Such an approach may allow a WTRU/video source and/or destination to indicate a desired QoS level based on a variety of parameters or factors irrespective of a given application. For example, a set of bases such as delay, packet error rate, throughput, etc. may be selected, and the desired QoS level may be represented by a point in the hyperspace spanned by the bases.

In an example, a WTRU may explicitly specify and/or request desired QoS parameters. For example, a WTRU may send an explicit request a QoS allocation to a PCC entity. The PCC entity may treat such an explicit QoS requirements with a higher priority and/or may continue to derive the QoS requirements for the WTRU if no explicit request are received. The such procedures may be implemented by including additional content in one or more bearer establishment messages and/or changes in the procedure at the PCC.

In an example, a WTRU may be configured to perform one or more of video packet separation into a plurality of video packet sub-streams, merging of the video packet sub-streams, and/or reordering of the packets included in the video packet sub-streams. For example, middleware may be used to perform one or more of video packet separation, merging, and/or reordering. In an example, the RTP protocol may be enhance in order to perform one or more of video packet separation, merging, and/or reordering. For example, NALUs may be separated into a plurality of sub-streams according to the type and/or priority information in the NALU header. A single sequence number space may be used across the sub-streams to facilitate reordering the packets in the merged sub-streams at the destination. In an example, IP headers may be used to convey information on the type of video packets (and/or other packets) to avoid inspecting information at layers above the IP layer.

In an example, techniques may be utilized to exposing more information to a data transmission network regarding the type of video packets (and/or other packets) being transmitted. For example, more information may be added to the NALU header to indicate the type of payload for H.264/AVC and/or to other video codecs.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A video packet separation method comprising:
generating a network abstraction layer unit, NALU, stream comprising one or more NALUs, wherein each of the NALUs comprises video information from a video stream;
separating the NALUs into at least two sub-streams, wherein the video information associated with each NALU sub-stream is of different importance;
encapsulating the NALUs associated with each of the sub-streams into one or more packets; and
transmitting the encapsulated packets associated with each of the sub-streams over a network, wherein the packets associated with each of the sub-streams are transmitted using a different dynamic payload type, and wherein the dynamic payload type indicates importance of video information in each of the sub-streams.

2. The method of claim 1, further comprising enabling the network to route the packets associated with each of the sub-streams based on port number.

3. The method of claim 1, further comprising adding a middleware header to each of the NALUs, wherein the middleware header comprises a sequence number, and wherein the sequence number indicates an order of the NALUs in the video stream.

4. The method of claim 3 wherein the sequence number associated with each of the NALUs is unique.

5. The method of claim 3, further comprising:
receiving the packets associated with each of the sub-streams;
determining the sequence number from the middleware header and based on the sequence number merging each of the NALUs from the received packets into a combined NALU stream, wherein the NALUs are merged to establish the order of the NALUs in the combined NALU stream; and
sending the combined NALU stream to a video decoder.

6. The method of claim 1, wherein the dynamic payload type is negotiated using a conference control protocol, and wherein the dynamic payload type indicates a network abstraction layer reference identification, NRI, value of the NALUs in each of the sub-streams.

7. A wireless transmit/receive unit, WTRU, (102) comprising:
a processor (118) configured to
generate a network abstraction layer unit, NALU, stream comprising one or more NALUs, wherein each of the NALUs comprises video information from a video stream;
separate the NALUs into at least two sub-streams, wherein the video information associated with each NALU sub-stream is of different importance;
encapsulate the NALUs associated with each of the sub-streams into one or more packets; and
a transmitter (120) configured to
transmit the encapsulated packets associated with each of the sub-streams over a network, wherein the packets associated with each of the sub-streams are transmitted using a different dynamic payload type, and wherein the dynamic payload type indicates importance of video information in each of the sub-streams.

8. The WTRU of claim 7, wherein the processor (118) is further configured to enable the network to route the packets associated with each of the sub-streams based on port number.

9. The WTRU of claim 7, wherein the processor (118) is further configured to add a middleware header to each of the NALUs, wherein the middleware header comprises a sequence number, and wherein the sequence number indicates an order of the NALUs in the video stream.

10. The WTRU of claim 9 wherein the sequence number associated with each of the NALUs is unique.

11. The WTRU of claim 9, further comprising:
a receiver (120) configured to
receive the packets associated with each of the sub-streams;
a receiving processor configured to
determine the sequence number from the middleware header and, based on the sequence number, merge each of the NALUs from the received packets into a combined NALU stream, wherein the NALUs are merged to establish the order of the NALUs in the combined NALU stream; and
send the combined NALU stream to a video decoder.

12. The WTRU of claim 7, wherein the dynamic payload type is negotiated using a conference control protocol, and wherein the dynamic payload type indicates a network abstraction layer reference identification, NRI, value of the NALUs in each of the sub-streams.

## Patentansprüche

1. Verfahren zur Videopaket-Separierung, umfassend:
Erzeugen eines Network Abstraction Layer Unit (NALU)-Stroms, umfassend eine oder mehrere NALUs, wobei jede der NALUs Videoinformationen aus einem Videostrom aufweist;
Separieren der NALUs in mindestens zwei Teilströme, wobei die mit jeder NALU verknüpften Videoinformationen von unterschiedlicher Bedeutung sind;
Einkapseln der mit jedem der Teilströme verknüpften NALUs in eines oder mehr Paketen; und
Übertragen der mit jedem der Teilströme verknüpften eingekapselten Pakete über ein Netzwerk, wobei die mit jedem der Teilströme verknüpften Pakete unter Verwendung eines unterschiedlichen dynamischen Nutzlast-Typs übertragen werden, und wobei der dynamische Nutzlast-Typ die Bedeutung von Video-Informationen in jedem der Teilströme angibt.

2. Verfahren nach Anspruch 1, ferner umfassend das Befähigen des Netzes, die mit jedem der Teilströme verknüpften Pakete aufgrund der Portnummer zu routen.

3. Verfahren nach Anspruch 1, ferner umfassend das Hinzufügen eines Middleware-Headers zu jeder der NALUs, wobei der Middleware-Header eine Sequenznummer aufweist, und wobei die Sequenznummer eine Reihenfolge der NALUs in dem Videostrom angibt.

4. Verfahren nach Anspruch 3, wobei die mit jeder der NALUs verknüpfte Sequenznummer eindeutig ist.

5. Verfahren nach Anspruch 3, ferner umfassend:
Empfangen der mit jedem der Teilströme verknüpften Pakete;
Ermitteln der Sequenznummer aus dem Middleware-Header und aufgrund der Sequenznummer Zusammenführen jeder der NALUs aus den empfangenen Paketen zu einem kombinierten NALU-Strom, wobei die NALUs zusammengeführt werden, um die Reihenfolge der NALUs in dem kombinierten NALU-Strom zu erstellen; und
Senden des kombinierten NALU-Stroms an einen Video-Decoder.

6. Verfahren nach Anspruch 1, wobei der dynamische Nutzlast-Typ unter Verwendung eines Konferenzkontroll-Protokolls ausgehandelt wird und wobei der dynamische Nutzlast-Typ einen Bezugsidentifikationswert der Netz-Abstraktionsschicht, NRI, der NALUs in jedem der Teilströme angibt.

7. Drahtlose Sende-/Empfangseinheit (WTRU) (102), umfassend:
einen Prozessor (118), der konfiguriert ist, um
einen Network Abstraction Layer Unit (NALU)-Strom zu erzeugen, der eine oder mehrere NALUs aufweist, wobei jede der NALUs Videoinformationen aus einem Videostrom aufweist;
die NALUs in mindestens zwei Teilströme zu separieren, wobei die mit jedem NALU-Teilstrom verknüpften Videoinformationen eine unterschiedliche Bedeutung aufweisen;
die mit jedem der Teilströme verknüpften NALUs in einem oder mehreren Paketen einzukapseln; und
einen Sender (120), der konfiguriert ist, um
die mit jedem der Teilstöme verknüpften eingekapselten Pakete über ein Netz zu senden, wobei die mit jedem der Teilströme verknüpften Pakete unter Verwendung eines unterschiedlichen dynamischen Nutzlast-Typs übertragen werden, und wobei der dynamische Nutzlast-Typ die Bedeutung von Video-Informationen in jedem der Teilströme angibt.

8. WTRU nach Anspruch 7, wobei der Prozessor (118) ferner konfiguriert ist, um das Netz zu befähigen, die mit jedem der Teilströme verknüpften Pakete aufgrund einer Portnummer zu routen.

9. WTRU nach Anspruch 7, wobei der Prozessor (118) ferner konfiguriert ist, um jeder der NALUs einen Middleware-Header hinzuzufügen, wobei der Middleware-Header eine Sequenznummer aufweist und wobei die Sequenznummer eine Reihenfolge der NALUs in dem Videostrom angibt.

10. WTRU nach Anspruch 9, wobei die mit jeder der NALUs verknüpften Sequenznummer eindeutig ist.

11. WTRU nach Anspruch 9, ferner umfassend:
einen Empfänger (120), der konfiguriert ist, um
die mit jedem der Teilströme verknüpften Pakete zu empfangen;
einen Empfangsprozessor, der konfiguriert ist, um
die Sequenznummer aus dem Middleware-Header zu ermitteln und aufgrund der Sequenznummer jede der NALUs aus den empfangenen Paketen zu einem kombinierten NALU-Strom zusammenzuführen, wobei die NALUs zusammengeführt werden, um die Reihenfolge der NALUs in dem kombinierten NALU-Strom zu erstellen; und
den kombinierten NALU-Strom an einen Video-Decoder zu senden.

12. WTRU nach Anspruch 7, wobei der dynamische Nutzlast-Typ unter Verwendung eines Konferenzkontroll-Protokolls ausgehandelt wird und wobei der dynamische Nutzlast-Typ einen Bezugsidentifikationswert der Netz-Abstraktionsschicht, NRI, der NALUs in jedem der Teilströme angibt.

## Revendications

1. Procédé de séparation de paquets vidéo comprenant de :
générer un flux d'unités de couche d'abstraction de réseau, NALU, comprenant un ou plusieurs NALUs, dans lequel chacune des NALUs comprend une information vidéo provenant d'un flux vidéo ;
séparer les NALUs an au moins deux sous flux, dans lequel l'information vidéo associée à chaque sous flux NALU est d'importance différente ;
encapsuler la NALU associée à chacun des sous flux dans un ou plusieurs paquets ; et
transmettre les paquets encapsulés associés à chacun des sous flux via un réseau, dans lequel les paquets associés à chacun des sous flux sont transmis en utilisant un type de charge utile dynamique différent et dans lequel le type de charge utile dynamique indique l'importance de l'information vidéo dans chacun des sous flux.

2. Procédé selon la revendication 1, comprenant en outre d'activer le réseau afin de router les paquets associés à chacun des sous flux sur la base du numéro de port.

3. Procédé selon la revendication 1, comprenant en outre d'ajouter un en-tête d'intergiciel à chacune des NALUs, dans lequel l'en-tête d'intergiciel comprend un numéro de séquence et dans lequel le numéro de séquence indique un ordre des NALUs dans le flux vidéo.

4. Procédé selon la revendication 3, dans lequel le numéro de séquence associée à chacune des NALUs est unique.

5. Procédé selon la revendication 3, comprenant en outre de :
recevoir les paquets associés à chacun des sous flux ;
déterminer le numéro de séquence d'après l'en-tête d'intergiciel et sur la base du numéro de séquence fusionner chacune des NALUs provenant des paquets reçus en un flux NALU mixte, dans lequel les NALUs sont fusionnées afin d'établir l'ordre des NALUs dans le flux NALU mixte ; et
envoyer le flux NALU mixte à un décodeur vidéo.

6. Procédé selon la revendication 1, dans lequel le type de charge utile dynamique est négocié en utilisant un protocole de commande de conférence et dans lequel le type de charge utile dynamique indique une valeur d'identification de référence de couche d'abstraction de réseau, NRI, des NALUs dans chacun des sous flux.

7. Unité d'émission/réception sans fil WTRU (102), comprenant :
un processeur (118) configuré pour
générer un flux d'unités de couche d'abstraction de réseau, NALU, comprenant un ou plusieurs NALUs, dans lequel chacune des NALUs comprend une information vidéo provenant d'un flux vidéo ;
séparer les NALUs an au moins deux sous flux, dans lequel l'information vidéo associée à chaque sous flux NALU est d'importance différente ;
encapsuler la NALU associée à chacun des sous flux dans un ou plusieurs paquets ; et
un émetteur (120) configuré pour
transmettre les paquets encapsulés associés à chacun des sous flux via un réseau, dans lequel les paquets associés à chacun des sous flux sont transmis en utilisant un type de charge utile dynamique différent et dans lequel le type de charge utile dynamique indique l'importance de l'information vidéo dans chacun des sous flux.

8. WTRU selon la revendication 7, dans laquelle le processeur (118) est en outre configuré pour activer le réseau afin de router les paquets associés à chacun des sous flux sur la base du numéro de port.

9. WTRU selon la revendication 7, dans laquelle le processeur (118) est en outre configuré pour ajouter un en-tête d'intergiciel à chacune des NALUs, dans lequel l'en-tête d'intergiciel comprend un numéro de séquence et dans lequel le numéro de séquence indique un ordre des NALUs dans le flux vidéo.

10. WTRU selon la revendication, dans laquelle le numéro de séquence associé à chacune des NALUs est unique.

11. WTRU selon la revendication 9, comprenant en outre :
un récepteur (120) configuré pour
déterminer les paquets associés à chacun des sous flux ;
un processeur de réception configuré pour
déterminer le numéro de séquence d'après l'en-tête d'intergiciel et sur la base du numéro de séquence fusionner chacune des NALUs provenant des paquets reçus en un flux NALU mixte, dans lequel les NALUs sont fusionnées afin d'établir l'ordre des NALUs dans le flux NALU mixte ; et
envoyer le flux NALU mixte à un décodeur vidéo

12. WTRU selon la revendication 7, dans laquelle le type de charge utile dynamique est négocié en utilisant un protocole de commande de conférence et dans laquelle le type de charge utile dynamique indique une valeur d'identification de référence de couche d'abstraction de réseau, NRI, des NALUs dans chacun des sous flux.
